# EUROPEAN PATENT APPLICATION

(11) **EP 3 113 458 A1**
(43) Date of publication of application: **04.01.2017**
(21) Application number: 14883949.1
(22) Date of filing: 22.07.2014
(51) Int. Cl.: H04L 29/12

(54) **METHOD FOR PROCESSING NAT64 PREFIX, NETWORK DEVICE AND DHCPV6 SERVER**

(30) Priority: 28.02.2014 CN 201410073817
(71) Applicant: ZTE Corporation, Shenzhen, Guangdong 518057 (CN)
(72) Inventor: WANG, Cui, Shenzhen Guangdong 518057 (CN); MENG, Wei, Shenzhen Guangdong 518057 (CN)
(74) Representative: Novagraaf Technologies
(86) International application number: PCT/CN2014/082756
(87) International publication number: WO 2015/127751

(57) **Abstract**

Provided are a method for processing a Network Address Translation 64 (NAT64) prefix, network equipment and a Dynamic Host Configuration Protocol for Internet Protocol version 6 (DHCPv6) server. The method includes that: a synthesis Internet Protocol version 6 (IPv6) prefix corresponding to each network configuration information option is acquired; and a DHCPv6 message is sent to a DHCPv6 server, wherein the DHCPv6 message carries at least one option of the synthesis IPv6 prefix. Through the present disclosure, various problems appearing when some servers are still deployed in an Internet Protocol version 4 (IPv4) network in an IPv6/IPv4 network interworking process are solved; in addition, network configurations are reduced; and moreover, when NAT64 services are upgraded or all upgraded to an IPv6 network in a later period, the network configurations are flexibly regulated, complexity in network maintenance is reduced and easiness for maintenance is ensured.

## Description

### Technical Field

The present disclosure relates to the field of communication, and in particular to a method for processing a Network Address Translation 64 (NAT64) prefix, network equipment and a Dynamic Host Configuration Protocol for Internet Protocol version 6 (DHCPv6) server.

### Background

At present, NAT in a related art belongs to a Wide Area Network (WAN) access technology, is a translation technology for translating a private (reserved) address into a legal Internet Protocol (IP) address, and is widely applied to various types of Internet access manners and various types of networks. NAT can solve the problem of IP address depletion.

Along with depletion of Internet Protocol version 4 (IPv4) address resources and progressive deployment of Internet Protocol version 6 (IPv6) networks, existence of large-scale IPv4 networks and new IPv6 networks in networks makes it urgent for an operator to solve problems about mutual visit of various IPv6 networks and IPv4 networks during coexistence of IPv6/IPv4. A NAT64 technology and a Domain Name System 64 (DNS64) technology are practical technologies for solving the problems about the mutual visit of IPv6 and IPv4 in such a scenario.

Technical principles of NAT64 and DNS64 will be simply introduced below.

NAT64 is a stateful technology for transmitting a network address and a protocol, and usually merely supports an IPv6 network-side user to initiate to connect and access to an IPv4-side network resource. However, NAT64 also supports manual configuration of a static mapping relationship for active initiation of connection and access of an IPv4 network to an IPv6 network. NAT64 may implements IPv6 and IPv4 network address and protocol translation under a Transmission Control Protocol (TCP), a User Datagram Protocol (UDP) and an Internet Control Message Protocol (ICMP).

DNS64 mainly supports work of NAT64, and mainly synthesizes record A (IPv4 address) in DNS query information into record AAAA (IPv6 address) and returns synthesized record AAAA to an IPv6-side user. Synthesis of record AAAA is implemented by pre-configuring an IPv6 prefix (called pref64::/n for short) used for synthesizing IPv6 address on DNS64.

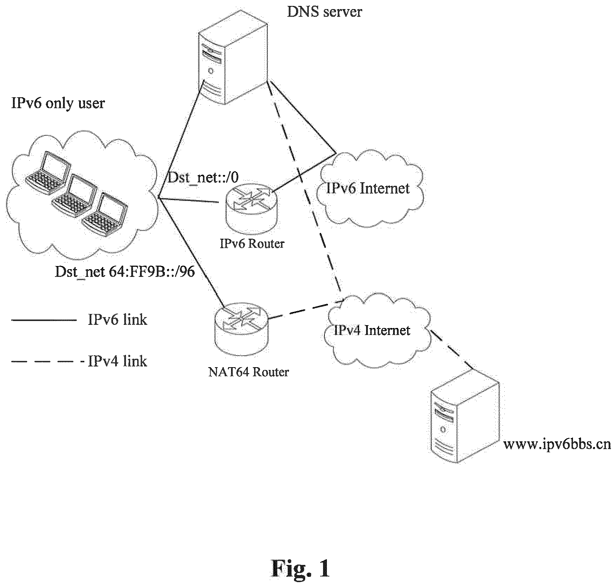

Networking of a common application scenario of NAT64 and DNS64 is as shown in Fig. 1.

In Fig. 1, a DNS64 server and a NAT64 router are completely independent parts, wherein 64:FF9B::/96 is a known prefix of DNS 64 pref64::/n, DNS64 usually defaults to use the prefix for synthesis from an IPv4 address to an IPv6 address, the prefix is also employed as a translation prefix of NAT64, and NAT64 translation is performed merely after traffic matched with the prefix is implemented. In DNS64 and NAT64, the prefix is usually represented as pref64::/n, wherein pref64 identifies a NAT64 prefix configured to synthesize the IPv6 address, n identifies a length of the NAT64 prefix, and besides adopting the known prefix, the prefix may be flexibly configured according to a practical network condition during network deployment. The length of the prefix supports: a range of 32, 40, 48, 56, 64, 96 or the like, and translation rules for prefixes with different lengths are not completely the same.

In Fig. 1, when an IPv6 only user initiates connection to access to an ordinary IPv6 website, traffic may be matched with a default IPv6 route to be directly forwarded to an IPv6 router for processing. When the IPv6 only user initiates connection to access to an IPv4 single-protocol stack server, the IPv6 only user is impossible to acquire IPv6 address information corresponding to an address of a destination IPv4 server, and sends a DNS request to the DNS64 server to find that the IPv4 server corresponds to an IPv4 address, i.e. record A, and then the DNS64 server is required to perform prefix synthesis, namely to synthesize record A and pref64::/n into record AAAA, and return the record AAAA to the IPv6 only user. Traffic of a pref64::/n network segment is routed and forwarded to the NAT64 router, thereby implementing IPv6 and IPv4 address and protocol translation to access to a resource in an IPv4 network.

In Fig. 1, DNS64 is required to cooperatively work with NAT64, a DHCPv6 server is required to issue the IPv6 address of the DNS64 server; in a scenario where no DNS64 is deployed in the network and the DNS is still located in an IPv4 network, NAT64 may not independently implement IPv6/IPv4 mutual visit. On one hand, client equipment may not acquire the IPv6 address corresponding to the DNS server, and furthermore, even though the client equipment acquires the IPv6 address corresponding to the DNS server, the client equipment may still not acquire record AAAA corresponding to the destination IPv4 server, so that a corresponding technical solution is required to solve the problem of the scenario under the condition of independent work of NAT64.

At present, there is a technical solution of acquiring pref64::/n of NAT64 in a Port Control Protocol (PCP) manner: draft-ietf-pcp-nat64-prefix64-04, and in the draft, PREFIX64 Option is added by extending a PCP to enable a PCP client to acquire information such as pref64::/n, an IPv6 suffix and an IPv4 prefix list from a NAT64-controlled PCP server; and however, such a technical solution requires a user and NAT64 equipment to enable the PCP, the PCP is not widely applied to networks, and under the condition that a Personal Computer (PC) is employed as a PCP client. The PC is required to upgrade an operating system to support the PCP. Obviously, the technical solution is wider in coverage and more difficult to carry out.

Furthermore, in Fig. 1, the DNS64 server may be configured to cooperatively work with NAT64 to solve the problem of the scenario where the original DNS server is still deployed in the IPv4 network; however, an existing IPv4 network further, besides the DNS server, correspondingly includes: a log server, a Cookie server, a resource location server, a strategy filtering server and the like, and parameters of these servers are all issued to IPv4 client equipment through a DHCPv4 option; and furthermore, for how IPv6-only client equipment acquires each network parameter in an IPv4 network, there is no universal technical solution to enable the IPv6-only client equipment to acquire IPv6 addresses of each IPv4 server.

### Summary

The present disclosure is intended to provide a method for processing a NAT64 prefix, network equipment and a DHCPv6 server, which may implement a synthesis IPv6 prefix supporting an IPv4 server and finally solve various problems appearing when some servers are still deployed in an IPv4 network in an IPv6/IPv4 network interworking process.

In order to solve the technical problem, the present disclosure provides a method for processing a NAT64 prefix, including: acquiring a synthesis Internet Protocol version 6 (IPv6) prefix corresponding to each network configuration information option; and sending a Dynamic Host Configuration Protocol for IPv6 (DHCPv6) message to a DHCPv6 server, wherein the DHCPv6 message carries at least one option of the synthesis IPv6 prefix.

In an example embodiment, different type values and prefix values defined in the options of the synthesis IPv6 prefix in the DHCPv6 message correspond to different Internet Protocol version 4 (IPv4) servers.

In an example embodiment, when reserved field values in the options of the synthesis IPv6 prefixes in the DHCPv6 message is defined to be default, it is identified that a same option of the synthesis IPv6 prefix is adopted for all IPv4 servers.

In an example embodiment, the DHCPv6 message comprises a DHCPv6 relay-forward message, and an option is added to the DHCPv6 relay-forward message to carry the synthesis IPv6 prefix.

In an example embodiment, a DHCPv6 message sent by the DHCPv6 server is received, wherein the DHCPv6 message comprises a DHCPv6 relay-reply message and each network parameter in the DHCPv6 relay-reply message carries an IPv6 address and/or a synthesized IPv6 address; and the DHCPv6 relay-reply message is processed to obtain a DHCPv6 reply message for sending to IPv6 client equipment.

In order to solve the technical problem, the present disclosure provides Network equipment, including: an acquisition component, configured to acquire a synthesis Internet Protocol version 6 (IPv6) prefix corresponding to each network configuration information option; and a sending component, configured to send a Dynamic Host Configuration Protocol for IPv6 (DHCPv6) message to a DHCPv6 server, wherein the DHCPv6 message carries at least one option of the synthesis IPv6 prefix.

In an example embodiment, different type values and prefix values defined in the options of the synthesis IPv6 prefix in the DHCPv6 message sent by the sending component correspond to different Internet Protocol version 4, IPv4, servers.

In an example embodiment, when reserved field values in the options of the synthesis IPv6 prefixes in the DHCPv6 message sent by the sending component is defined to be default, it is identified that a same option of the synthesis IPv6 prefix is adopted for all IPv4 servers.

In an example embodiment, the DHCPv6 message sent by the sending component comprises a DHCPv6 relay-forward message, and an option is added to the DHCPv6 relay-forward message to carry the synthesis IPv6 prefix.

In an example embodiment, further including: a receiving component, configured to receive a DHCPv6 message sent by the DHCPv6 server, wherein the DHCPv6 message comprises a DHCPv6 relay-reply message and each network parameter in the DHCPv6 relay-reply message carries an IPv6 address and/or a synthesized IPv6 address, wherein the sending component is further configured to process the DHCPv6 relay-reply message to obtain a DHCPv6 reply message for sending to IPv6 client equipment.

In order to solve the problem, the present disclosure provides a method for processing a Network Address Translation 64 (NAT64) prefix, including: receiving, by a Dynamic Host Configuration Protocol for Internet Protocol version 6, DHCPv6, server, a DHCPv6 message from intermediate equipment, wherein the DHCPv6 message carries an option of synthesis Internet Protocol version 6 (IPv6) prefix; synthesizing a corresponding IPv6 address according to the option of the synthesis IPv6 prefix and an acquired Internet Protocol version 4 (IPv4) address of a corresponding IPv4 server; and sending the IPv6 address serving as a parameter in each network configuration information option, to the intermediate equipment or client equipment.

In an example embodiment, after receiving, by the DHCPv6 server, the DHCPv6 message from the intermediate equipment, further including: storing the synthesis IPv6 prefix.

In order to solve the problem, the present disclosure provides a Dynamic Host Configuration Protocol for Internet Protocol version 6 (DHCPv6) server, including: a receiving component, configured to receive a DHCPv6 message from intermediate equipment, wherein the DHCPv6 message carries an option of synthesis Internet Protocol version 6, IPv6, prefix; a synthesis component, configured to synthesize a corresponding IPv6 address according to the option of the synthesis IPv6 prefix and an acquired Internet Protocol version 4, IPv4, address of a corresponding IPv4 server; and a sending component, configured to send the IPv6 address serving as a parameter in each network configuration information option, to the intermediate equipment or client equipment.

In an example embodiment, the device further including: a storage component, configured to store the synthesis IPv6 prefix.

From the above, the present disclosure provides a method for processing an NAT64 prefix, network equipment and a DHCPv6 server, so that various problems appearing when some servers are still deployed in the IPv4 network in the IPv6/IPv4 network interworking process are solved; in addition, network configurations are reduced; and moreover, when NAT64 services are upgraded or all upgraded to an IPv6 network in a later period, the network configurations are flexibly regulated, complexity in network maintenance is reduced and easiness for maintenance is ensured.

### Brief Description of the Drawings

In order to describe the technical solutions in the embodiments of the present disclosure more clearly, the drawings required by the embodiment will be simply introduced below, and obviously, descriptions and drawings below are only some embodiments of the present disclosure, form part of the present disclosure and are not intended to form improper limits to the present disclosure. In the drawings:
Fig. 1 is networking of an application scenario of NAT64 and DNS64 according to a related art;
Fig. 2 is a flowchart of a method for processing a NAT64 prefix by intermediate equipment according to an embodiment of the present disclosure;
Fig. 3 is a flowchart of a method for processing a NAT64 prefix by a DHCPv6 server according to an embodiment of the present disclosure;
Fig. 4 is a diagram of a system for processing a NAT64 prefix according to an embodiment of the present disclosure;
Fig. 5 is a diagram of a message format of a DHCPv6 message containing an option of a synthesis IPv6 prefix according to an embodiment of the present disclosure;
Fig. 6 is a flowchart of synthesis of an IPv6 address of an IPv4 DNS server according to an embodiment of the present disclosure; and
Fig. 7 is a flowchart of synthesis of an IPv6 address of an IPv4 log server according to an embodiment of the present disclosure.

### Detailed Description of the Embodiments

A DHCPv6 is designed to process allocation of an IPv6 address, an IPv6 prefix and other network information to client equipment. Wherein the other network information includes information of a DNS server, a log server, a Cookie server, a resource location server, a strategy server and the like. In a scenario where the other network information servers are deployed in an IPv4 network, a corresponding IPv6 prefix is required to synthesize an IPv6 address corresponding to a corresponding IPv4 server, wherein the IPv6 prefixes may be the same, and may also be different each other, and these IPv6 prefixes are collectively referred to as a synthesis IPv6 prefix.

In order to make the purpose, technical solutions and advantages of the present disclosure clearer, the embodiments of the present disclosure will be described below with reference to the drawings in detail. It is important to note that the embodiments in the present disclosure and characteristics in the embodiments may be freely combined under the condition of no conflicts and are not limited to the following embodiments.

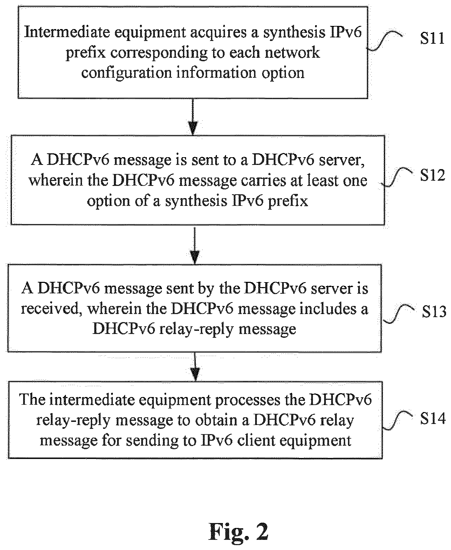

Fig. 2 is a flowchart of a method for processing an NAT64 prefix by intermediate equipment according to an embodiment of the present disclosure, and as shown in Fig. 2, the method includes:
Step 11: intermediate equipment Broadband Remote Access Server (BRAS)/NAT64 acquires a synthesis IPv6 prefix corresponding to each network configuration information option;
Step 12: the intermediate equipment sends a DHCPv6 message to a DHCPv6 server, wherein the DHCPv6 message carries an option of at least one synthesis IPv6 prefix;
Step 13: the intermediate equipment further receives a DHCPv6 message sent by the DHCPv6 server, wherein the DHCPv6 message includes a DHCPv6 relay-reply message and each network parameter carried in the message is an IPv6 address and/or a synthesized IPv6 address; and
Step 14: the intermediate equipment processes the DHCPv6 relay-reply message to obtain a DHCPv6 relay message for sending to IPv6 client equipment.

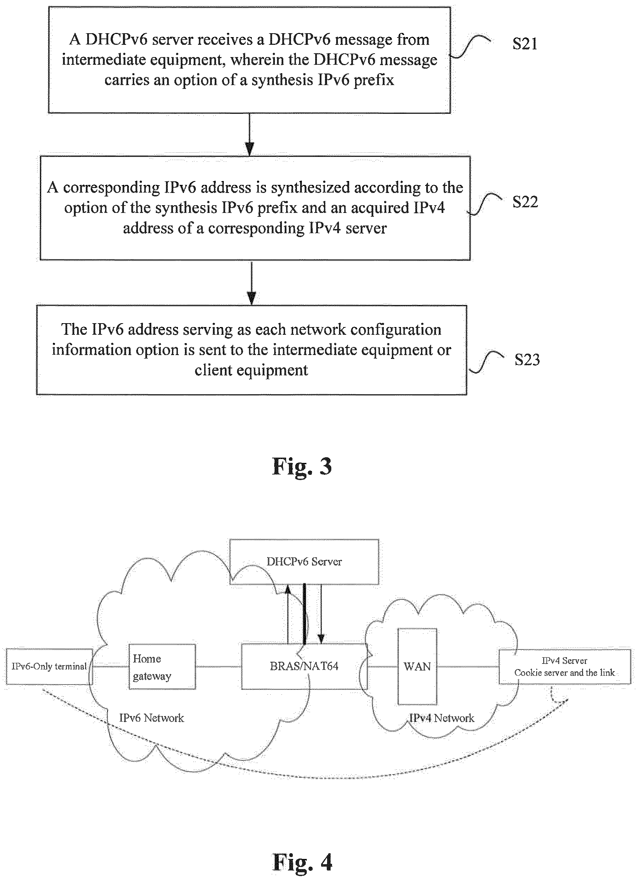

Fig. 3 is a flowchart of a method for processing a NAT64 prefix by a DHCPv6 server according to an embodiment of the present disclosure, and as shown in Fig. 3, the method includes:
Step 21: a DHCPv6 server receives a DHCPv6 message from intermediate equipment, wherein the DHCPv6 message carries an option of a synthesis IPv6 prefix;
Step 22: the DHCPv6 server synthesizes a corresponding IPv6 address according to the option of the synthesis IPv6 prefix and an acquired IPv4 address of a corresponding IPv4 server; and
Step 23: the DHCPv6 server sends the IPv6 address serving as a parameter in each network configuration information option, to the intermediate equipment or client equipment.

After the technical solutions are adopted, that is, an option in a DHCPv6 is extended to implement automatic synthesis of an IPv6 address while completing an automatic configuration of a basic IPv6 address. In such a manner, problems about access of a universal IPv6-only client to an IPv4 network server are solved, so that complexity in maintenance is reduced and convenience for transition to a pure IPv6 network is enhanced.

Fig. 4 is a diagram of a system for processing a NAT64 prefix according to an embodiment of the present disclosure, and as shown in Fig. 4, the system includes:

BRAS/NAT64 equipment, serving as DHCPv6 relay intermediate equipment (i.e. network equipment) and configured to acquire a synthesis IPv6 prefix corresponding to each network configuration information option and append the acquired synthesis IPv6 prefix information into a new option in a DHCPv6 message for sending to DHCPv6 server equipment,
wherein the network equipment may include:
an acquisition component, configured to acquire the synthesis IPv6 prefix corresponding to each network configuration information option; and
a sending component, configured to send a DHCPv6 message to a DHCPv6 server, wherein the DHCPv6 message carries at least one option of the synthesis IPv6 prefix.

In an example embodiment, the network equipment may further include:
a receiving component, configured to receive a DHCPv6 message sent by the DHCPv6 server, wherein the DHCPv6 message includes a DHCPv6 relay-reply message and each network parameter in the message is an IPv6 address and/or a synthesized IPv6 address; and
the sending component may further be configured to process the DHCPv6 relay-reply message to obtain a DHCPv6 relay message for sending to IPv6 client equipment.

The DHCPv6 server equipment, serving as the DHCPv6 server, is configured to store the received synthesis IPv6 prefix option for synthesis with an IPv4 address of a corresponding IPv4 server, and take the synthesized IPv6 address as each network configuration information option, and send to the BRAS/NAT64 intermediate equipment through a DHCPv6 message.

Wherein, the DHCPv6 server may include:
a receiving component, configured to receive the DHCPv6 message from the intermediate equipment, wherein the DHCPv6 message contains the option of the synthesis IPv6 prefix;
a synthesis component, configured to synthesize a corresponding IPv6 address according to the option of the synthesis IPv6 prefix and an acquired IPv4 address of a corresponding IPv4 server; and
a sending component, configured to send the IPv6 address serving as a parameter of each network configuration information option, to the intermediate equipment or the client equipment.

In an example embodiment, the DHCPv6 server may further include:
a storage component, configured to store the synthesis IPv6 prefix.

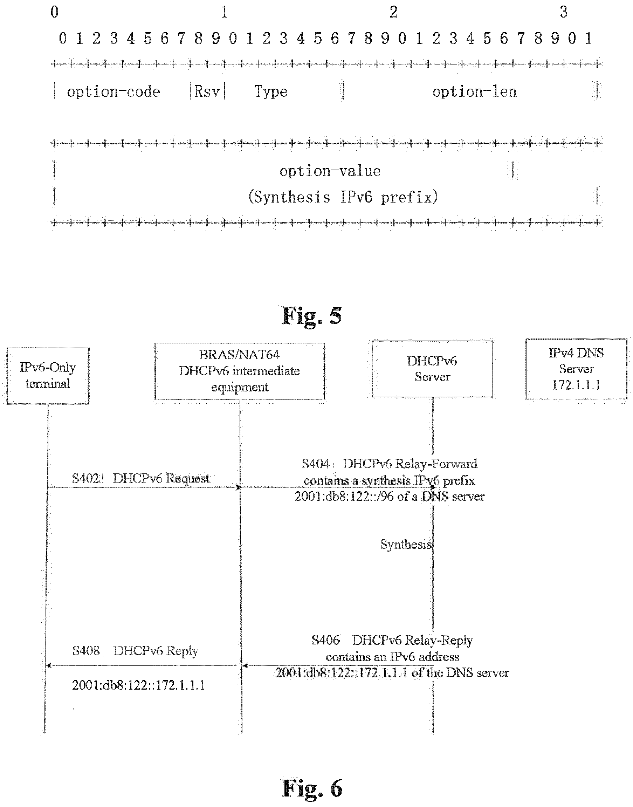

Fig. 5 is a diagram of a message format of a DHCPv6 message containing an option of a synthesis IPv6 prefix according to an embodiment of the present disclosure, wherein
option-code field: identifies a code value corresponding to a synthesis IPv6 prefix;
Rsv (reserved) field: identifies that a same synthesis IPv6 prefix is used globally when defaulting;
Type field: identifies a type of a IPv4 server, such as a DNS server and a Cookie server, wherein different type fields identifies different IPv4 server, and the type field is used on a DHCPv6 server for synthesis of an IPv6 address of a corresponding IPv4 server;
Option-len field: identifies a length of an option-value;
Option-value field: identifies a synthesis IPv6 prefix corresponding to a type; and
when different IPv6 prefixes are used for different IPv4 servers, a DHCPv6 message is required to contain multiple options of the synthesis IPv6 prefix.

Fig. 6 is a flowchart of synthesis of an IPv6 address of an IPv4 DNS server according to an embodiment of the present disclosure, and as shown in Fig. 6, the flow may include the following processing steps:
Step 402: intermediate equipment BRAS/NAT64 receives a DHCPv6 request message or a DHCPv6 information-request message from IPv6 client equipment, adds a synthesis IPv6 prefix 2001:db8:122::/96 of a DNS server, and encapsulates the whole message into a DHCPv6 relay-forward message for sending to DHCPv6 server equipment;
Step 404: the DHCPv6 server equipment receives the DHCPv6 relay-forward message from the intermediate equipment, extracts the IPv6 prefix 2001 :db8:122::/96 in a synthesis IPv6 prefix option from the message, and acquires an IPv4 address 172.1.1.1 of a corresponding DNS server, and a synthesized IPv6 address 2001 :db8:122:172:1.1.1;
Step 406: the DHCPv6 server equipment sends, the synthesized IPv6 address of the DNS server serving as a network configuration information option, to the intermediate equipment BRAS/NAT64 through a DHCPv6 relay-reply message; and
Step 408: the intermediate equipment BRAS/NAT64 receives the DHCPv6 relay-reply message containing the IPv6 address of the DNS server from the DHCPv6 server equipment, and performs processing to obtain a corresponding DHCPv6 reply message containing the IPv6 address of the IPv6 DNS server for sending to the IPv6 client equipment.

In an example embodiment, when each IPv6 prefix on the intermediate equipment BRAS/NAT64 is updated, the DHCPv6 relay-forward message is actively sent to the DHCPv6 server equipment to update corresponding prefix information stored in the server equipment.

In an example embodiment, for the same IPv4 server, different intermediate equipment BRAS/NAT64 may adopt different synthesis IPv6 prefixes and may also adopt the same synthesis IPv6 prefix, which depends on a practical network deployment condition.

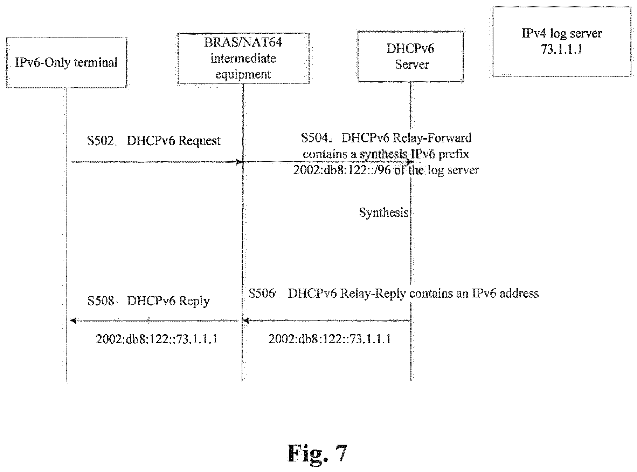

Fig. 7 is a flowchart of synthesis of an IPv6 address of an IPv4 log server according to an embodiment of the present disclosure, and as shown in Fig. 7, the diagram may include the following processing steps:
Step 502: intermediate equipment BRAS/NAT64 receives a DHCPv6 request message or a DHCPv6 solicit message or a DHCPv6 information-request message from IPv6 client equipment, adds a synthesis IPv6 prefix 2002:db8:122::/96 of a log server, and encapsulates the whole message into a DHCPv6 relay-forward message for sending to DHCPv6 server equipment;
Step 504: the DHCPv6 server equipment receives the DHCPv6 relay-forward message from the intermediate equipment, extracts the IPv6 prefix 2002:db8:122::/96 in a synthesis IPv6 prefix option from the message, and acquires an IPv4 address 73.1.1.1 of the corresponding log server and the synthesized IPv6 address 2002:db8:122:73:1.1.1;
Step 506: the DHCPv6 server equipment sends the synthesized IPv6 address of the log server serving as a network configuration information option, to the intermediate equipment BRAS/NAT64 through a DHCPv6 relay-reply message; and
Step 508: the intermediate equipment BRAS/NAT64 receives the DHCPv6 relay-reply message containing the IPv6 address of the log server from the DHCPv6 server equipment, and performs processing to obtain a corresponding DHCPv6 reply message containing the IPv6 address of the IPv6 log server for sending to the IPv6 client equipment.

In an example embodiment, when each IPv6 prefix on the intermediate equipment BRAS/NAT64 is updated, the DHCPv6 relay-forward message is actively sent to the DHCPv6 server equipment to update corresponding prefix information stored in the server equipment.

In an example embodiment, for the same IPv4 server, different intermediate equipment BRAS/NAT64 may adopt different synthesis IPv6 prefixes and may also adopt the same synthesis IPv6 prefix, which depends on a practical network deployment condition.

The abovementioned embodiment is merely a specific embodiment of the content of the present disclosure, and meanwhile, the technical solution may also be applied to various other application scenarios, which will not be elaborated one by one herein.

Those skilled in the art should know that all or part of steps in the method may be implemented by related hardware instructed by a program, and the program may be stored in a computer-readable storage medium, such as a read-only memory, a magnetic disk or a compact disc. Optionally, all or part of the steps of the embodiment may also be implemented by one or more integrated circuits. Correspondingly, each module/unit in the embodiment may be implemented in a hardware form, and may also be implemented in a software function module form. The present disclosure is not limited to any specific form of combination of hardware and software.

The above is only the preferred embodiment of the present disclosure, the present disclosure may certainly have multiple other embodiments, those skilled in the art may make various corresponding modifications and transformations according to the present disclosure without departing from the spirit and essence of the present disclosure, but these corresponding modifications and transformations shall fall within the scope of protection of the appended claims of the present disclosure.

### Industrial Applicability

As mentioned above, by the abovementioned embodiment and example implementation modes, various problems appearing when some servers are still deployed in an IPv4 network in an IPv6/IPv4 network interworking process are solved; in addition, network configurations are reduced; and moreover, when NAT64 services are upgraded or all upgraded to an IPv6 network in a later period, the network configurations are flexibly regulated, complexity in network maintenance is reduced and easiness for maintenance is ensured.

## Claims

1. A method for processing a Network Address Translation 64, NAT64, prefix, comprising:
acquiring a synthesis Internet Protocol version 6, IPv6, prefix corresponding to each network configuration information option; and
sending a Dynamic Host Configuration Protocol for IPv6, DHCPv6, message to a DHCPv6 server, wherein the DHCPv6 message carries at least one option of the synthesis IPv6 prefix.

2. The method as claimed in claim 1, wherein
different type values and prefix values defined in the options of the synthesis IPv6 prefix in the DHCPv6 message correspond to different Internet Protocol version 4, IPv4, servers.

3. The method as claimed in claim 1, wherein
when reserved field values in the options of the synthesis IPv6 prefixes in the DHCPv6 message is defined to be default, it is identified that a same option of the synthesis IPv6 prefix is adopted for all IPv4 servers.

4. The method as claimed in claim 1, wherein
the DHCPv6 message comprises a DHCPv6 relay-forward message, and an option is added to the DHCPv6 relay-forward message to carry the synthesis IPv6 prefix.

5. The method as claimed in any one of claims 1 to 4, wherein
a DHCPv6 message sent by the DHCPv6 server is received, wherein the DHCPv6 message comprises a DHCPv6 relay-reply message and each network parameter in the DHCPv6 relay-reply message carries an IPv6 address and/or a synthesized IPv6 address; and
the DHCPv6 relay-reply message is processed to obtain a DHCPv6 reply message for sending to IPv6 client equipment.

6. Network equipment, comprising:
an acquisition component, configured to acquire a synthesis Internet Protocol version 6, IPv6, prefix corresponding to each network configuration information option; and
a sending component, configured to send a Dynamic Host Configuration Protocol for IPv6, DHCPv6, message to a DHCPv6 server, wherein the DHCPv6 message carries at least one option of the synthesis IPv6 prefix.

7. The network equipment as claimed in claim 6, wherein
different type values and prefix values defined in the options of the synthesis IPv6 prefix in the DHCPv6 message sent by the sending component correspond to different Internet Protocol version 4, IPv4, servers.

8. The network equipment as claimed in claim 6, wherein
when reserved field values in the options of the synthesis IPv6 prefixes in the DHCPv6 message sent by the sending component is defined to be default, it is identified that a same option of the synthesis IPv6 prefix is adopted for all IPv4 servers.

9. The network equipment as claimed in claim 6, wherein
the DHCPv6 message sent by the sending component comprises a DHCPv6 relay-forward message, and an option is added to the DHCPv6 relay-forward message to carry the synthesis IPv6 prefix.

10. The network equipment as claimed in any one of claims 6 to 9, further comprising:
a receiving component, configured to receive a DHCPv6 message sent by the DHCPv6 server, wherein the DHCPv6 message comprises a DHCPv6 relay-reply message and each network parameter in the DHCPv6 relay-reply message carries an IPv6 address and/or a synthesized IPv6 address, wherein
the sending component is further configured to process the DHCPv6 relay-reply message to obtain a DHCPv6 reply message for sending to IPv6 client equipment.

11. A method for processing a Network Address Translation 64, NAT64, prefix, comprising:
receiving, by a Dynamic Host Configuration Protocol for Internet Protocol version 6, DHCPv6, server, a DHCPv6 message from intermediate equipment, wherein the DHCPv6 message carries an option of synthesis Internet Protocol version 6, IPv6, prefix;
synthesizing a corresponding IPv6 address according to the option of the synthesis IPv6 prefix and an acquired Internet Protocol version 4, IPv4, address of a corresponding IPv4 server; and
sending the IPv6 address serving as a parameter in each network configuration information option, to the intermediate equipment or client equipment.

12. The method as claimed in claim 11, after receiving, by the DHCPv6 server, the DHCPv6 message from the intermediate equipment, further comprising:
storing the synthesis IPv6 prefix.

13. A Dynamic Host Configuration Protocol for Internet Protocol version 6, DHCPv6, server, comprising:
a receiving component, configured to receive a DHCPv6 message from intermediate equipment, wherein the DHCPv6 message carries an option of synthesis Internet Protocol version 6, IPv6, prefix;
a synthesis component, configured to synthesize a corresponding IPv6 address according to the option of the synthesis IPv6 prefix and an acquired Internet Protocol version 4, IPv4, address of a corresponding IPv4 server; and
a sending component, configured to send the IPv6 address serving as a parameter in each network configuration information option, to the intermediate equipment or client equipment.

14. The DHCPv6 server as claimed in claim 13, further comprising:
a storage component, configured to store the synthesis IPv6 prefix.
